# EUROPEAN PATENT SPECIFICATION

(11) **EP 4 428 388 B1**
(45) Date of publication and mention of the grant of the patent: **02.12.2026**
(21) Application number: 24162062.4
(22) Date of filing: 07.03.2024
(51) Int. Cl.: F16D 65/092, F16D 65/095

(54) **AIR DISC BRAKE PAD**
LUFTSCHEIBENBREMSBELAG
PLAQUETTE DE FREIN À DISQUE PNEUMATIQUE

(30) Priority: 09.03.2023 GB 202303479
(43) Date of publication of application: 11.09.2024
(73) Proprietor: MEI BRAKES LIMITED, Sheffield, South Yorkshire S9 2QD (GB)
(72) Inventor: Roberts, Paul, Monmouth, NP20 5QU (GB); Jackson, Jonathan Leslie Christopher, Ross On Wye, HR9 6FP (GB); Kinder, Adrian Richard, Newport, NP19 8AF (GB)
(74) Representative: Noble, Frederick

(56) References cited:
- DE-A1- 102004 002 571
- GB-A- 2 563 080
- US-A- 5 842 546
- US-B2- 9 365 193

## Description

The present invention relates to an air disc brake pad and to a method of providing a poka-yoke to prevent incorrect insertion of a brake pad to a brake caliper.

### BACKGROUND TO THE INVENTION

In an air disc brake for a commercial vehicle, including a heavy goods vehicle, brake calipers actuate brake pads against a rotating disc during braking. The brake pads are a wearable component and need replacing when the friction material on the brake pad wears to a predefined limit. It is important that the replacement brake pads are assembled correctly to the brake caliper.

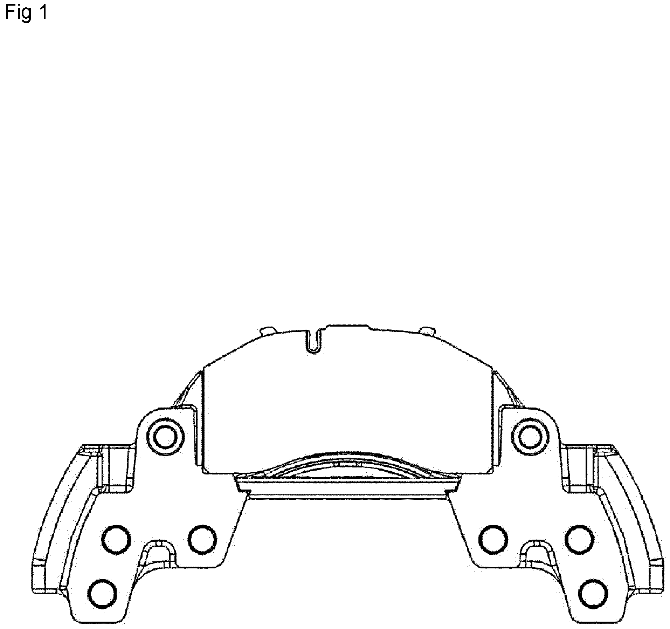

As shown in Figure 1, brake calipers include brake pad carriers which receive the brake pads. Brake pads may be common inboard and outboard brake pads (i.e. can be inserted on both the inside face and outside face of the brake disc) and symmetrical. This means it is possible for the brake pads to be assembled in the brake pad carrier incorrectly, where the pad may be inserted with the backplate facing the brake disc. To prevent this, it is known to poka-yoke (i.e. fool-proof) the pad assembly. As seen in DE102004002571A1, this is generally achieved by providing a finger and notch arrangement.

The interface at the carrier (e.g. the 'finger') requires additional cast material on the carrier. The additional cast material increases both the weight of the carrier and the cost. Furthermore, the form and location of the finger can increase the material stresses during brake operation, reducing the life of the carrier. Some solutions may also entail having either a non-symmetrical pad or carrier. This can result in unusual pad wear patterns or non-uniform stresses when the brake is operating in opposite directions (e.g. where brake calipers are fitted to different sides of a vehicle).

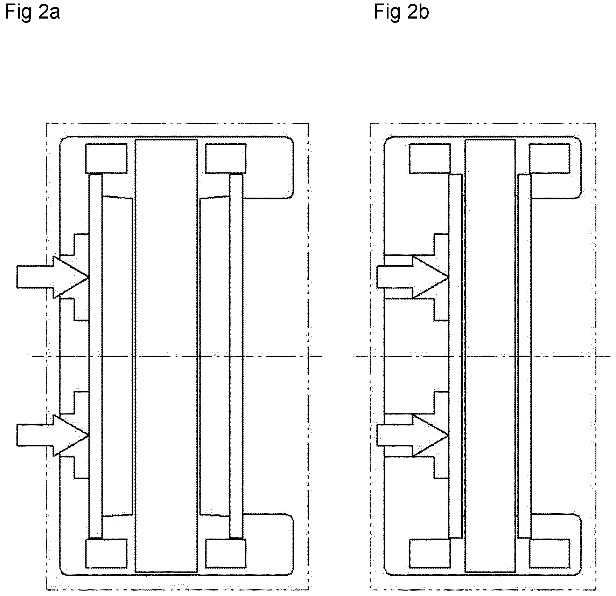

Furthermore, if the permissible pad and disc wear allowance is exceeded, then the worn pad can be at risk of slipping between the disc and brake pad carrier, thereby being ejected from the brake. This is shown in Figures 2a and 2b.

GB2563099A relates to a brake pad 211a for a heavy vehicle disc brake (10), the brake pad 211a defining a first circumferential surface 277a and a second opposing circumferential surface 277b for contact with corresponding pad abutment surfaces, 274a and 274b. The brake pad 211a has first and second resilient arms, 282a and 282b projecting in a generally circumferential direction to contact the corresponding pad abutment structures, so as to urge the brake pad 211a in a direction away from the rotor (10) when the brake pad 211a is urged towards the rotor during application of the brake, thus preventing brake dragging.

The document GB2563080A can also be mentioned as prior art.

It is an object of the present invention to reduce or substantially obviate the aforementioned problems.

### STATEMENT OF INVENTION

According to the present invention there is provided an air disc brake pad for inserting into a brake pad carrier, the brake pad including a backplate and a friction material mounted on one side of the backplate, the pad periphery including an inner side, an outer side and first and second ends;
in which at least a portion of the pad periphery includes a thickened edge, the thickened edge extending in a direction opposing the friction material; and
at least one rear protrusion is provided, the at least one rear protrusion extending from the backplate in a direction opposing the friction material; and
in which the depth of the at least one rear protrusion is greater than the depth of the thickened edge.

The at least one rear protrusion can be used to prevent the brake pad being inserted into a brake caliper back-to-front (i.e., with the backplate facing the brake disc). The rear protrusion may be received in a corresponding space in a backplate facing side of the brake caliper. The depth of the at least one rear protrusion may cause the rear protrusion to abut a top edge of the brake disc during insertion if the brake pad is inserted with the backplate facing the brake disc, preventing further insertion of the brake pad. This poka-yokes or "fool-proofs" the correct method of assembly. The insertion of the brake pad is poka-yoked without requiring additional material on the brake pad carrier.

Providing a thicker edge on the backplate mitigates the risk of the brake pad slipping between the brake disk and brake pad carrier if the permissible pad and disc wear allowance is exceeded. The at least one rear protrusion may further mitigate the risk of the brake pad slipping between the brake disk and brake pad carrier.

The at least one rear protrusion may have a depth of at least 4 mm. For example, the at least one rear protrusion may have a depth of at least 5 mm. For example, the at least one rear protrusion may have a depth of at least 6 mm.

The thickened edge may have a depth of at least 3 mm. For example, the thickened edge may have a depth of at least 4 mm. For example, the thickened edge may have a depth of at least 5 mm. The at least one rear protrusion may protrude from the thickened edge.

The thickened edge and the at least one rear protrusion may be spaced apart. In other words, a gap may be provided between the at least one rear protrusion and the thickened edge.

The at least one gap may be a region of the backplate which has a thickness equal to the rest of the backplate. In other words, there may be at least one gap provided in which the edge is not thickened. The at least one gap may reduce the weight and material required during manufacture of the backplate.

The at least one rear protrusion may be disposed substantially adjacent to the inner side of the backplate. The at least one rear protrusion may be disposed substantially adjacent to the first and/or second end of the backplate. Where the at least one protrusion is disposed substantially adjacent to the inner side and one or both of the first and second ends, the rear protrusion can be received in a space in a backplate facing side of a number of brake calipers already on the market. In other words, the brake pad can be inserted into existing brake pad carriers without altering the brake pad carrier.

The at least one rear protrusion may be positioned substantially adjacent to the first and/or second end of the backplate to allow the pads to be stacked on top of each other whilst keeping the faces of the friction material parallel to each other. The at least one rear protrusion may have a depth which allows the pads to be stacked on top of each other whilst keeping face of the friction material are parallel to each other. For example, the depth of the at least one rear protrusion may be less than the thickness of the friction material.

The thickened edge may be disposed adjacent to at least one of the first and second ends of the backplate.

The air disc brake pad may include first and second abutment tabs. The first abutment tab may extend from the first end of the backplate. The second abutment tab may extend from the second end. During use, the first and second abutment tabs may provide horizontal abutment with brake pad carrier. During use, the first and second abutment tabs may rest on at least one brake pad carrier horn of the brake pad carrier.

Providing the at least one rear protrusion in a space in a backplate facing side of brake pad calipers may mitigate the distance the brake pad can drop should the abutment tabs fracture. For example, the abutment tabs may fracture when under excessive vibrational loading. Reducing the distance that the brake pad drops following the fracture may ensure alignment between the brake pad and disc is maintained.

At least a portion of the thickened edge may be disposed at the point at which the brake pad horizontally abuts the brake pad carrier. At least a portion of the thickened edge may be disposed on at least one of the first and second abutment tabs.

At least a portion of the thickened edge may be substantially L-shaped (i.e. the thickened edge may have a vertical portion and a horizontal portion, the vertical portion and horizontal portion being substantially perpendicular to each other). The L-shaped portion of the thickened edge may have a profile defined by substantially straight edges. The profile of the L-shaped portion of the thickened edge may include rounded corners. The internal corner of the L-shape may be radiused to avoid a stress-raiser. The internal corner may also face inwardly and downwardly with respect to the application axis of the pad, for example, in the use position, to act as a stop for preventing the pad slipping into the brake pad carrier when worn.

At least a portion of the thickened edge may extend along at least a portion of one of the first and second ends and corresponding abutment tab. The portion of thickened edge extending along at least a portion of one of the first and second ends may provide vertical engagement with the brake pad carrier. The portion of thickened edge extending along the corresponding abutment tab may provide horizontal engagement with the brake pad carrier. It faces substantially downwardly to prevent slipping of the pad into the carrier as previously described.

Where the thickened edge includes a substantially L-shaped portion, the vertical portion may extend along at least a portion of one of the first and second ends.

The brake pad may be substantially symmetrical. The symmetry may be about a central vertical axis extending from the inner side to the outer side. The symmetry of the brake pad may mitigate against the development of unusual wear patterns. The symmetry between the first and second ends may mitigate against non-uniform stresses being applied to the brake pad when the brake is operating in opposite directions (e.g. where the brake pad is fitted to an opposite side of a vehicle).

The brake pad may be provided as part of a pair of common inboard and outboard pads. The brake pads may be for original equipment brake assemblies. The brake pads may be replacement brake pads.

The at least one rear protrusion can be used to prevent the brake pad being inserted into a brake caliper back-to-front (i.e., with the backplate facing the brake disc).

As described above with reference to the first aspect of the present invention, providing the at least one rear protrusion in a space in a backplate facing side of brake pad calipers may mitigate the distance the brake pad can drop should the abutment tabs fracture. For example, the abutment tabs may fracture when under excessive vibrational loading. Reducing the distance that the brake pad drops following the fracture may ensure alignment between the brake pad and disc is maintained.

The brake pad may have any feature or combination of features described in the first aspect of the present invention.

According to a third aspect of the present invention, there is provided a method of providing a poka-yoke to prevent incorrect assembly of an air disc brake pad to a brake caliper, the method comprising providing an air disc brake as described above, in which the at least one rear protrusion can only be accommodated by a corresponding gap in a backplate facing side of the brake caliper.

The method can be used to prevent incorrect assembly of a brake pad to a brake caliper. The method can be used to prevent a brake pad being fitted to a brake pad caliper where the backplate faces the brake disc (i.e. back-to-front).

### BRIEF DESCRIPTION OF THE DRAWINGS

For a better understanding of the present invention, and to show more clearly how it may be carried into effect, reference will now be made by way of example only to the accompanying drawings, in which:
Figure 1 shows a conventional brake pad inserted into a conventional brake pad carrier;
Figures 2a and 2b show plan views of conventional brake pads in brake calipers that are unworn and worn;
Figure 3 shows a perspective view of an air disc brake pad according to the present invention;
Figure 4 shows a front view of a brake pad assembly including the brake pad of Figure 3 inserted into a brake pad carrier;
Figure 5a and Figure 5b show plan views of a cross-section of a brake pad assembly including a pair of brake pads of Figure 3 correctly and incorrectly fitted to a brake pad caliper;
Figures 6a and 6b show plan views of a cross-section of a brake pad assembly including a pair of brake pads of Figure 3 that are unworn and worn; and
Figure 7 shows a plurality of brake pad backplates of Figure 3 arranged in a stack including a close-up of the abutment between two adjacent brake pad backplates.

### DESCRIPTION OF PREFERRED EMBODIMENTS

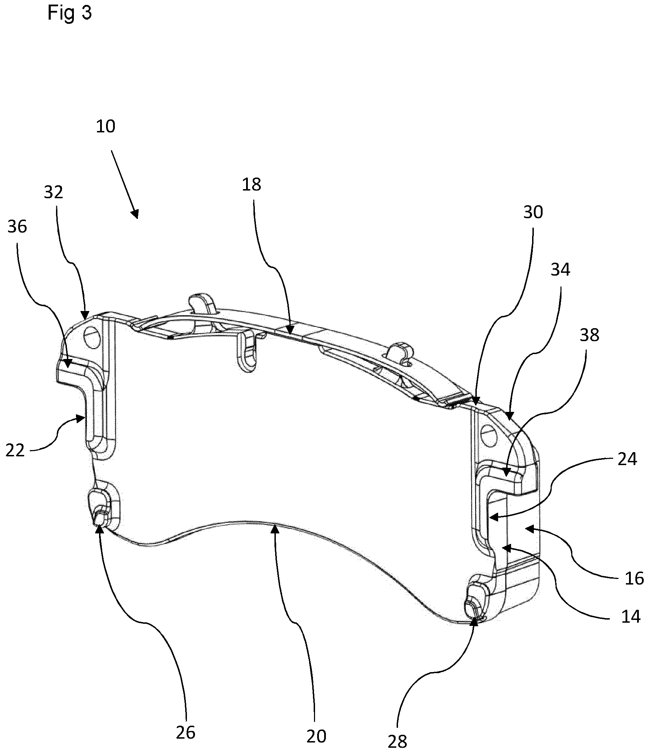

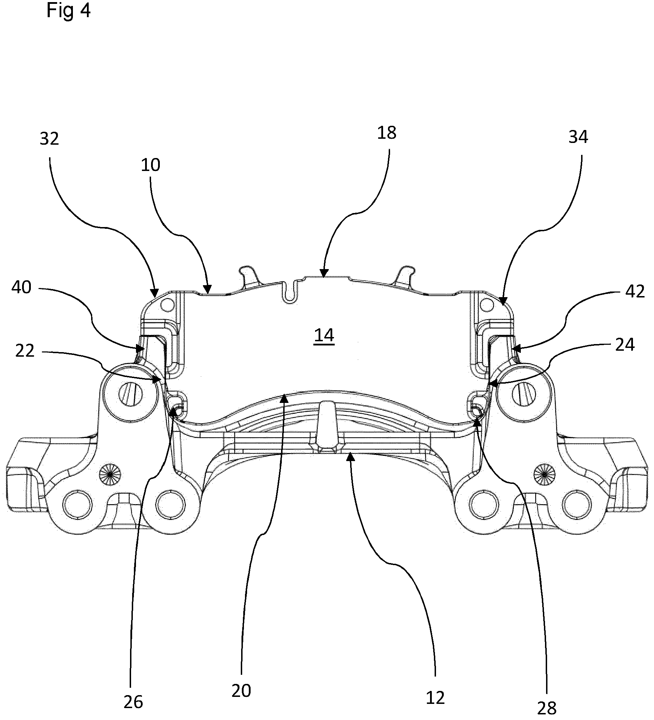

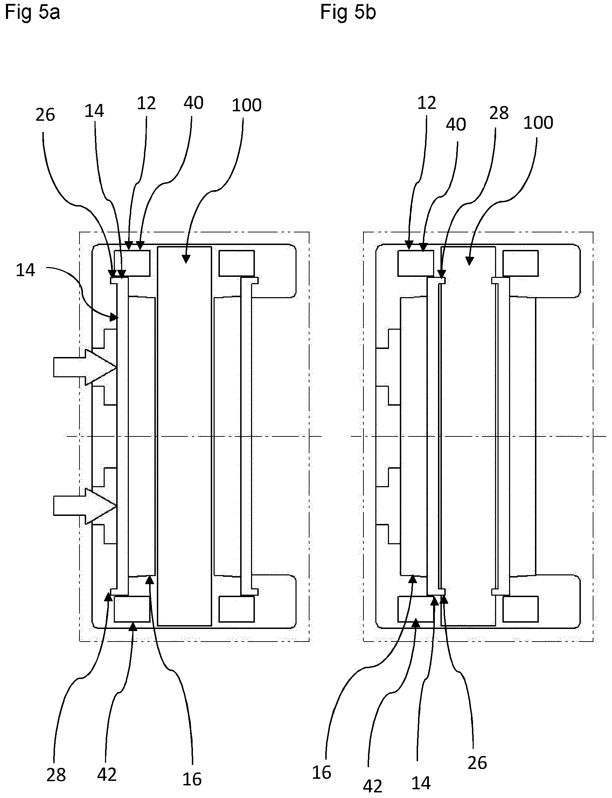

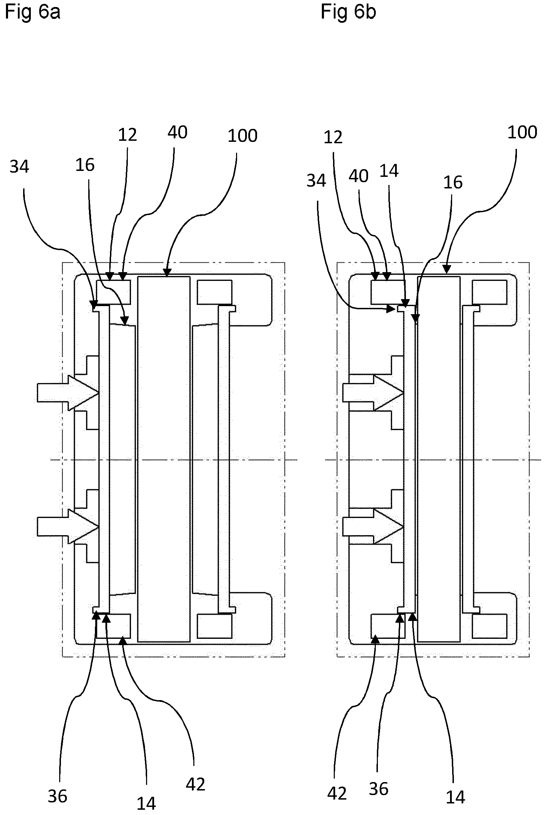

Referring firstly to Figures 3 and 4, an air disc brake pad according to the present invention is generally shown at 10. During use, the air disc brake pad 10 is disposed inside a brake carrier 12 as shown in Figure 4. The air disc brake pad carrier 12 is part of an air disc brake. The air disc brake pad carrier 12 is part of a pair of brake pad carriers in the air disc brake. The air disc brake pad carriers 12 are disposed on opposite sides of a brake disc (100, see Figures 5a and 6a).

The brake pad carrier 12 has a base or inner side. The brake pad carrier has a first side wall formed from a first carrier horn 40. The first carrier horn 40 extends substantially perpendicular from a first end of the base. The brake pad carrier 12 has a second side wall formed from a second carrier horn 42. The second carrier horn 42 extends substantially perpendicular from a second end of the base. The second carrier horn 42 opposes the first carrier horn 40. The base and side walls define a brake pad receiving region. The carrier horns 40, 42 provide bearing surfaces for "ears" of the backplate, described further below.

The brake pad 10 includes a backplate 14. The brake pad 10 also includes a friction material 16. The friction material 16 is mounted to a disc-facing side of the backplate 14.

The brake pad 10 has a pad periphery 30. The pad periphery 30 extends around the periphery of the backplate 14. The pad periphery 30 has an inner side 20, the lower side of the pad as viewed in Figure 3. The inner side 20 of the pad periphery 30 faces an inner side of the brake pad carrier 12 during use. The pad periphery 30 has an outer side 18. The outer side 18 of the pad periphery 30 opposes the inner side 20 of the brake pad periphery 30. The pad periphery 30 includes a first end 22. The first end 22 of the pad periphery 30 faces and lies adjacent to the first carrier horn 40 of the brake pad carrier 12 during use. The pad periphery 30 includes a second end 24. The second end 24 of the pad periphery 30 faces and lies adjacent to the second carrier horn 42 of the brake pad carrier 12 during use.

First and second rear protrusions 26, 28 are provided on the backplate 14 of the brake pad 10. The protrusions 26, 28 are added to the backplate 14 casting. In this embodiment, the rear protrusions 26, 28 extend by 5 to 6 mm from the backplate 14. However, it will be appreciated that in other embodiments, the depth of the rear protrusions 26, 28 can be tailored to the brake caliper.

The first and second rear protrusions 26, 28 are disposed adjacent to the inner side 20 and the first and second ends 22, 24 respectively. In other words, the rear protrusions 26, 28 are disposed in bottom left and right-hand corners of the backplate 14, as viewed in Figure 3.

As can be seen in Figure 5a, when the brake pad 10 is correctly inserted into the brake caliper, the rear protrusions 26, 28 are accommodated in a space between the brake pad 10 and the brake caliper. When inserted with the backplate 14 facing the brake disc 100, the rear protrusions 26, 28 abut the brake disc 100. Full insertion of the brake pad 10 into the brake caliper is prevented, as shown in Figure 5b. In other words, the rear protrusions 26, 28 poka-yoke the incorrect insertion of the brake pad 10 into the brake caliper.

The brake caliper can slide axially (i.e. in a direction towards and away from the brake disc 100) to accommodate wear of the friction material 16. The extent of movement of the brake caliper is limited to prevent insertion of the rear protrusions 26, 28 when the brake pad 10 is inserted incorrectly (i.e. back-to-front).

As the friction material 16 wears, the effectiveness of the poka-yoke reduces. The depth of the rear protrusions 26, 28 can be tailored to provide an appropriate poka-yoke for the friction material 16 used and/or the space provided in the brake caliper. For example, a greater depth of the rear protrusions 26, 28 may be provided to increase the effectiveness of the poka-yoke over the wear of the pad.

Referring again to Figures 3 and 4, the brake pad 10 includes first and second abutment tabs 32, 34 or "ears". The abutment tabs 32, 34 protrude from the first and second ends 22, 24 of the brake pad 14. During use, the abutment tabs 32, 34 sit above the first and second carrier horns 40, 42. The abutment tabs 32, 34 provide horizontal abutment, i.e., fix the position of the depth of engagement between the brake pad 10 and the brake pad carrier 12.

During use, the rear protrusions 26, 28 mitigate the distance the brake pad 10 can drop should the abutment tabs 32, 34 fracture. For example, the abutment tabs 32, 34 may fracture when under excessive vibrational loading. Reducing the distance that the brake pad 10 drops following the fracture may ensure alignment between the brake pad 10 and brake disc 100 is maintained.

Portions of the pad periphery 30 contact the first and second carrier horns 40, 42 during use. Portions of the pad periphery 30 include first and second thickened edges 36, 38. A portion of the first thickened edge 36 is disposed on the first abutment tab 32. A portion of the second thickened edge 38 is disposed on the second abutment tab 34.

The thickened edges 36, 38 are disposed where the pad periphery 30 horizontally abuts the carrier horns 40, 42. In other words, the edges of the backplate are locally thickened where the brake pad 10 horizontally abuts the first and second carrier horns 40, 42.

The first thickened edge 36 extends along a portion of the first end 22. The second thickened edge 38 extends along a portion of the second end 24. The thickened edges 36, 38 are disposed where the pad periphery 30 vertically abuts the carrier horns 40, 42. Each thickened edge 36, 38 has a substantially L-shaped profile. A gap is provided between each of the thickened edges 36, 38 and the corresponding rear protrusions 26, 28.

The thickened edges 36, 38 have a thickness greater than the majority of the backplate 14. The thickened edges 36, 38 have a depth of between 3 and 5 mm extending from the backplate 14. The thickened edges 36, 38 have a depth less than the depth of the rear protrusions 26, 28.

Referring now to Figures 6a and 6b, a gap is shown between the brake caliper and the brake disc 100. Figure 6a shows an unworn brake pad 10 in a brake caliper and Figure 6b shows a worn brake pad 10 in a brake caliper. That is to say, the friction material 16 of the brake pad 10 in Figure 6b has worn away during use. As one or both of the friction material 16 and brake disc 100 wears, a distance between the carrier abutments 40, 42 and brake disc 100 increases. As the distance between the carrier abutments 40, 42 and brake disc 100 increases, the risk that the brake pad 10 slips between the carrier abutments 40, 42 and brake disc 100 increases. The depth of the thickened edges 36, 38 compensates for the increased distance between the carrier abutments 40, 42 and brake disc 100. The thickened edges 36, 38 mitigate the risk of the brake pad 10 slipping into the gap between the brake caliper and the brake disc 100.

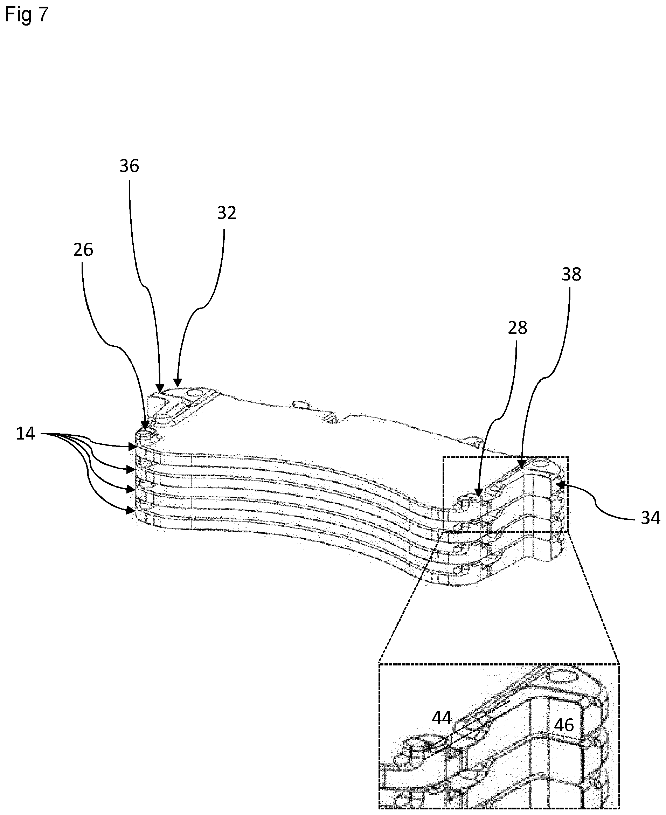

Referring now to Figure 7, the backplate 14 is shaped to allow even stacking of a plurality of backplates 14.

As discussed above, the rear protrusions 26, 28 have depth greater than the depth of the thickened edges 36, 38. The difference in depth between the rear protrusions 26, 28 and thickened edges 36, 38 is generally shown at 44 in Figure 7. A portion of the thickened edge additionally extends from the opposite side of the backplate 14. The extent of the thickened edge from the opposite side is shown at 46 in Figure 7. The difference in depth between the rear protrusion and thickened edge 44 and the extent of the thickened edge 46 are substantially the same length. That is to say that the backplate 14 has a total thickness at the thickened edges 36, 38 that is substantially the same as the total thickness of the backplate 14 at the rear protrusions 26, 28. The substantially same thicknesses allow the plurality of backplates 14 to be stacked in a parallel arrangement.

When a first backplate 14 is stacked on top of a second backplate 14, the thickened edges 36, 38 of the first backplate 14 and the rear protrusions 26, 28 of the second backplate 14 support the first backplate 14 parallel to the second backplate 14. The backplates 14 may be stacked evenly where each backplate 14 is level. Keeping the backplates 14 parallel when stacked is advantageous in manufacturing.

A significant advantage of the brake pad assemblies described above is that the brake pads can only be fully inserted into brake pad carriers in the correct orientation. A brake pad with the backplate facing the brake disc cannot be fully inserted into a brake pad carrier. Where a brake pad cannot be fully inserted, the operator is alerted to the fact that the brake pad is being inserted back-to-front thereby "fool-proofing" the correct assembly of the brake pad assembly. Furthermore, when the pads are worn, even if the ears fracture, the thickened edges hold the pad in the carrier, preventing a total loss of braking.

## Claims

1. An air disc brake pad (10) for inserting into a brake pad carrier (12), the brake pad including a backplate (14) and a friction material (16) mounted on one side of the backplate, the pad periphery (30) including an inner side (20), an outer side (18) and first and second ends (22, 24);
in which at least a portion of the pad periphery includes a thickened edge (36, 38), the thickened edge extending in a direction opposing the friction material; and
at least one rear protrusion (26, 28) is provided, the at least one rear protrusion extending from the backplate in a direction opposing the friction material;
***characterized in that*** the depth of the at least one rear protrusion is greater than the depth of the thickened edge;
in which the air disc brake pad includes first and second abutment tabs (32, 34) for providing horizontal abutment with the brake pad carrier, the first abutment tab extending from the first end and the second abutment tab extending from the second end; and
in which at least a portion of the thickened edge extends along at least a portion of one of the first and second ends and a corresponding abutment tab.

2. An air disc brake pad (10) as claimed in claim 1, in which the at least one rear protrusion (26, 28) has a depth of at least 4 mm.

3. An air disc brake pad (10) as claimed in any preceding claim, in which the at least one rear protrusion (26, 28) has a depth of at least 5 mm.

4. An air disc brake pad (10) as claimed in any preceding claim, in which the at least one rear protrusion (26, 28) has a depth of at least 6 mm.

5. An air disc brake pad (10) as claimed in any preceding claim, in which the thickened edge (36, 38) and rear protrusion (26, 28) are spaced apart.

6. An air disc brake pad (10) as claimed in any preceding claim, in which the at least one rear protrusion (26, 28) is disposed substantially adjacent to the inner side (20) of the backplate (14).

7. An air disc brake pad (10) as claimed in any preceding claim, in which at least a portion of the thickened edge (36, 38) is substantially L-shaped.

8. An air disc brake pad (10) as claimed in any preceding claim, in which the air disc brake pad is substantially symmetrical about a central vertical axis extending from the inner side (20) to the outer side (18).

9. A method of providing a poka-yoke to prevent incorrect assembly of an air disc brake pad (10) to a brake caliper; the method comprising providing an air disc brake pad as claimed in any preceding claim, in which the at least one rear protrusion (26, 28) can only be accommodated by a corresponding gap in a backplate facing side of the brake caliper.

## Patentansprüche

1. Druckluft-Scheibenbremsbelag (10) zum Einsetzen in einen Bremsbelagträger (12), wobei der Bremsbelag eine Rückplatte (14) und ein auf einer Seite der Rückplatte angebrachtes Reibmaterial (16) enthält, wobei der Belagumfang (30) eine Innenseite (20), eine Außenseite (18) und ein erstes und ein zweites Ende (22, 24) enthält;
wobei mindestens ein Abschnitt des Belagumfangs einen verdickten Rand (36, 38) enthält, wobei sich der verdickte Rand in einer dem Reibmaterial entgegengesetzten Richtung erstreckt; und
mindestens ein hinterer Vorsprung (26, 28) vorgesehen ist, wobei sich der mindestens eine hintere Vorsprung von der Rückplatte in einer dem Reibmaterial entgegengesetzten Richtung erstreckt;
**dadurch gekennzeichnet, dass**
die Tiefe des mindestens einen hinteren Vorsprungs größer ist als die Tiefe des verdickten Randes;
der Druckluft-Scheibenbremsbelag eine erste und eine zweite Anschlaglasche (32, 34) zum Bereitstellen eines horizontalen Anschlags an dem Bremsbelagträger enthält, wobei sich die erste Anschlaglasche vom ersten Ende erstreckt und die zweite Anschlaglasche sich vom zweiten Ende erstreckt; und
sich mindestens ein Abschnitt des verdickten Randes entlang mindestens eines Abschnitts eines des ersten und des zweiten Endes und einer entsprechenden Anschlaglasche erstreckt.

2. Druckluft-Scheibenbremsbelag (10) nach Anspruch 1, wobei der mindestens eine hintere Vorsprung (26, 28) eine Tiefe von mindestens 4 mm aufweist.

3. Druckluft-Scheibenbremsbelag (10) nach einem vorstehenden Anspruch, wobei der mindestens eine hintere Vorsprung (26, 28) eine Tiefe von mindestens 5 mm aufweist.

4. Druckluft-Scheibenbremsbelag (10) nach einem vorstehenden Anspruch, wobei der mindestens eine hintere Vorsprung (26, 28) eine Tiefe von mindestens 6 mm aufweist.

5. Druckluft-Scheibenbremsbelag (10) nach einem vorstehenden Anspruch, wobei der verdickte Rand (36, 38) und der hintere Vorsprung (26, 28) voneinander beabstandet sind.

6. Druckluft-Scheibenbremsbelag (10) nach einem vorstehenden Anspruch, wobei der mindestens eine hintere Vorsprung (26, 28) im Wesentlichen an die Innenseite (20) der Rückplatte (14) angrenzend angeordnet ist.

7. Druckluft-Scheibenbremsbelag (10) nach einem vorstehenden Anspruch, wobei mindestens ein Abschnitt des verdickten Randes (36, 38) im Wesentlichen L-förmig ist.

8. Druckluft-Scheibenbremsbelag (10) nach einem vorstehenden Anspruch, wobei der Druckluft-Scheibenbremsbelag im Wesentlichen um eine sich von der Innenseite (20) und der Außenseite (18) erstreckende vertikale Mittelachse symmetrisch ist.

9. Verfahren zum Bereitstellen eines Verwechslungsschutzes, um falschen Einbau eines Druckluft-Scheibenbremsbelags (10) an einem Bremssattel zu verhindern; wobei das Verfahren das Bereitstellen einer Druckluft-Scheibenbremsbelags nach einem vorstehenden Anspruch umfasst, wobei der mindestens eine hintere Vorsprung (26, 28) nur von einem entsprechenden Spalt in einer der Rückplatte zugewandten Seite des Bremssattels aufgenommen werden kann.

## Revendications

1. Plaquette de frein à disque pneumatique (10) pour insertion dans un support de plaquette de frein (12), la plaquette de frein comportant une plaque arrière (14) et un matériau de friction (16) monté sur un côté de la plaque arrière, la périphérie de plaquette (30) comportant un côté intérieur (20), un côté extérieur (18) et des première et seconde extrémités (22, 24) ;
dans laquelle au moins une partie de la périphérie de plaquette comporte un bord épaissi (36, 38), le bord épaissi s'étendant dans une direction opposée au matériau de friction ; et
au moins une saillie arrière (26, 28) est prévue, l'au moins une saillie arrière s'étendant à partir de la plaque arrière dans une direction opposée au matériau de friction ;
**caractérisée en ce que**
la profondeur de l'au moins une saillie arrière est supérieure à la profondeur du bord épaissi ;
dans laquelle la plaquette de frein à disque pneumatique comporte des première et seconde languettes de butée (32, 34) pour fournir une butée horizontale avec le support de plaquette de frein, la première languette de butée s'étendant à partir de la première extrémité et la seconde languette de butée s'étendant à partir de la seconde extrémité ; et
dans laquelle au moins une partie du bord épaissi s'étend le long d'au moins une partie de l'une des première et seconde extrémités et d'une languette de butée correspondante.

2. Plaquette de frein à disque pneumatique (10) selon la revendication 1, dans laquelle l'au moins une saillie arrière (26, 28) a une profondeur d'au moins 4 mm.

3. Plaquette de frein à disque pneumatique (10) selon l'une quelconque des revendications précédentes, dans laquelle l'au moins une saillie arrière (26, 28) a une profondeur d'au moins 5 mm.

4. Plaquette de frein à disque pneumatique (10) selon l'une quelconque des revendications précédentes, dans laquelle l'au moins une saillie arrière (26, 28) a une profondeur d'au moins 6 mm.

5. Plaquette de frein à disque pneumatique (10) selon l'une quelconque des revendications précédentes, dans laquelle le bord épaissi (36, 38) et la saillie arrière (26, 28) sont espacés.

6. Plaquette de frein à disque pneumatique (10) selon l'une quelconque des revendications précédentes, dans laquelle l'au moins une saillie arrière (26, 28) est disposée de manière sensiblement adjacente au côté intérieur (20) de la plaque arrière (14).

7. Plaquette de frein à disque pneumatique (10) selon l'une quelconque des revendications précédentes, dans laquelle au moins une partie du bord épaissi (36, 38) est sensiblement en forme de L.

8. Plaquette de frein à disque pneumatique (10) selon l'une quelconque des revendications précédentes, dans laquelle la plaquette de frein à disque pneumatique est sensiblement symétrique autour d'un axe vertical central s'étendant depuis le côté intérieur (20) et le côté extérieur (18).

9. Procédé de fourniture d'un détrompeur pour empêcher un assemblage incorrect d'une plaquette de frein à disque pneumatique (10) sur un étrier de frein ; le procédé comprenant la fourniture d'un frein à disque pneumatique selon l'une quelconque des revendications précédentes, dans lequel l'au moins une saillie arrière (26, 28) ne peut être hébergée que par un espace correspondant dans un côté faisant face à la plaque arrière de l'étrier de frein.
